## Europäisches Patentamt
## European Patent Office
## Office européen des brevets

(11) Publication number: **0 129 218**
A2

# EUROPEAN PATENT APPLICATION

(21) Application number: **84106827.3**

(22) Date of filing: **14.06.84**

(51) Int. Cl.³: **B 29 H 7/22**
**B 29 D 3/02, B 29 D 29/00**

(30) Priority: **14.06.83 PL 242548**

(43) Date of publication of application:
**27.12.84 Bulletin 84/52**

(84) Designated Contracting States:
**AT BE DE FR GB IT NL SE**

(71) Applicant: **Centralny Osrodek Badawczo-Rozwojowy Technicznych Wyrobow Wlokienniczych**
**ul. M. Curie-Sklodowskiej 3/5**
**Lodz(PL)**

(71) Applicant: **Zyrardowskie Zaklady Tkanin Technicznych im. M. Kasprzaka**
**ul. Okrzei 51**
**Zyrardow(PL)**

(72) Inventor: **Romalski, Witold**
**ul. Srodkowa 25/27 m 19**
**Zyrardów(PL)**

(72) Inventor: **Kowalewski, Stanislaw**
**ul.Kosciuszki 15/17 m 38**
**Zyrardów(PL)**

(72) Inventor: **Piotrowski, Jan**
**Al. Tysiaclecia 2 m 14**
**Piastów(PL)**

(72) Inventor: **Moczulski, Antoni**
**ul. Rewolucji Pazdziernikowej 64 m 16**
**Zyrardów(PL)**

(72) Inventor: **Szredzki, Jerzy**
**ul.F. de Girarda 15 m 36**
**Zyrardów(PL)**

(72) Inventor: **Zyska, Bronislaw**
**ul.Wolnosci 47**
**Chorzów(PL)**

(72) Inventor: **Stasinski, Andrzej**
**ul. Grabieniec 16 m 144**
**Lódz(PL)**

(72) Inventor: **Ostaszewski, Leszek**
**ul. Pojezierska 26 m 1**
**Lódz(PL)**

(72) Inventor: **Redlich, Grazyna**
**ul. Kusocinskiego 80 m 55**
**Lódz(PL)**

(72) Inventor: **Juszczyk, Jadwiga**
**ul. Lermontowa 12 m 35**
**Lódz(PL)**

(74) Representative: **Lehn, Werner, Dipl.-Ing. et al,**
**Hoffmann, Eitle & Partner Patentanwälte Arabellastrasse 4 (Sternhaus)**
**D-8000 München 81(DE)**

(54) Multi-layer yarn web especially for the core of rubber and polyvinyl chloride conveyor belts.

(57) Multi-layer yarn web especially for the core for rubber and polyvinyl chloride conveyor belts, characterized by high strength and elasticity and uniform thickness, consisting of at least two layers of yarn webs connected durably with threads, silk or yarn twisted from synthetic or natural fibres.

EP 0 129 218 A2

## Multi-layer yarn web especially for the core of rubber and polyvinyl chloride conveyor belts

The subject of the invention is multi-layer yarn web especially for the core of rubber and polyvinyl chloride conveyor belts, suitable for transport of mainly loose materials in all branches of industry, especially in the mining industry.

Those skilled in the art know multi-layer cloths in which the multi-layer effect is obtained by connection durably a multiplied amount of the systems of the warp and the weft. For example, in the British patent No. 1 273 528 of 1968, "Improvements referring to cloths and conveyor belts made of such cloths", the description essence of obtaining multi-layer cloths consists in durable connection with threads of the doubling warp of several layers of flatly laid basic warp with several layers of weft. The task of the basic warps is to give high strength to the multi-layer separator, whereas weft systems are both the outer layers and the filling layers having the substantial influence on the total thickness of the cloth, and the doubling warp connects in a durable way the threads of warps and wefts. Structures of multi-layer cloths of the similar types are described in the following patents:

Czechoslovakian patent No. 121 614 of 1964 - "Double-warp cloth of chemical fibres for conveyor belts",

U.S. patent No. 1 535 698 of 1961 - "Cloth for belts or driving belts" West German patent No. 1 312 552 of 1970 - "Improvements referring to single-layer cloths in the application to mechanical belts such as conveyor belts".

A disadvantage of the above described structures of cloths is big filling thereof with systems of the warp and the weft, small elasticity, which in consequence entails processing difficulties in production of belts- too small penetration of coating materials into the structure of cloth, and in consequence a shortened life of belts with the result of a greater hazard of delamination. Worse conditions of use of ready conveyors are associated with high rigidity of belts and tendencies to minimum deflection, and thus, smaller amounts of the material transported per unit time.

A separate negative characteristic is a relatively complex production of multi-layer cloths themselves, which requires the adaptation and strengthening of individual elements of weaving machines in order to avoid their rapid wear, as well as high labour-consumption and low yield of the manufacturing process.

An object of the present invention is to provide a structure and design of multi-layer yarn web such that transfixion of at least two component yarn webs causes durable combining of the connected layers and obtaining a homogeneous multi-layer product. The multi-layer yarn web thus constructed and durably connected forms a homogeneous system ensuring simultaneous and uniform work of individual layers, which gives in the effect preferably for the spacers to conveyor belts high strength of the order of 500 to 3000 daN/cm in the longitudinal direction, high elasticity and deflection larger than in the known solutions, and a uniform thickness of the order of 4 to 11 mm. The multi-layer yarn web according to the invention consists of at least two layers of yarn webs arranged in parallel relation to each other so that threads of the warp system of the lower and the upper layer in the vertical section lie in one plane.

Component layers are connected durably in such a way that the sewing thread connects simultaneously at least two directly neighbouring threads of the warp system of each of the layers. Each of at least two layers consists of parallel straightened threads of the warp, to which askew straightened weft threads are transversely placed, lying in one plane parallel to the plane of the warp threads, and both systems of threads are connected durably by transfixing with the doubling warp.

The multi-layer web according to the invention is characterized in that the basic systems of each of at least two component layers are obtained with the application:

- for the warp - of silk from chemical fibres, single-threaded or cable-yarn type, single-threaded or cable type core yarn, of the linear mass within the range of 150 to 1000 tex at twist of 50 to 300 rev/m,

- for the weft - of silk from chemical fibres, single-threaded or cable type, single-threaded or cable type core yarn, of the linear mass within the range of 100 to 600 tex at twist of 50 to 300 rev/m.

The warp connecting the basic systems of component layers

- 4 -                                    0129218

as well as particular layers into multi-layer yarn-web
are threads, silk or yarn, twisted from synthetic or
natural fibres  of the linear mass of from 30 to 300 tex
preferably for spacers for rubber and polyvinyl chloride
conveyor belts for the mining industry - 90 to 200 tex.
The number of transfixions connecting particular layers
on the area of 1 cm² of multi-layer yarn-web is included
within the limits of 5 to 25, preferably for spacers for
rubber and polyvinyl chloride conveyor  belts for the
mining industry. Production according to the invention
is relatively simple and the achieved yield is 3-4 times
higher in relation to the known methods of production of
multi-layer cloths.

Claims:

1. Multi-layer yarn web suitable for the core for rubber and polyvinyl chloride conveyor belts, characterized by at least two layers of yarn web arranged parallel to each other in such a way that threads of the warp system of the upper and the lower layer in the vertical plane lie in one plane.

2. Multi-layer yarn web according to claim 1, characterized in that component layers are durably connected in such a way that at least two neighbouring threads of the warp system of each of the layers are subject to simultaneous connection.

3. Multi-layer yarn web according to claim 1 or 2 characterized in that layers of component yarn webs are connected durably with threads, silk or yarn twisted from synthetic or natural fibres of the linear mass of 30 to 300 tex, and the number of transfixions connecting the layers is from 5 to 25 per $cm^2$.

4. Multi-layer yarn web comprising a plurality of layers each having a warp system of threads characterized in that each vertical sectional plane containing the centre line of a warp thread in one layer also contains the centre line of a warp thread in another layer.

5. Multi-layer yarn web according to claim 4 wherein more than two layers are provided.

6. Multi-layer yarn web according to claim 5 characterized in that each said plane contains a centre line of a warp thread from each layer.

7. A core for a conveyor belt characterized by multi-layer yarn web according to any one of the preceding claims.

8. A conveyor belt characterized by a core according to claim 7.